# EUROPÄISCHE PATENTSCHRIFT

(11) **EP 0 922 719 B1**
(45) Veröffentlichungstag und Bekanntmachung des Hinweises auf die Patenterteilung: **11.08.2004**
(21) Anmeldenummer: 98120368.0
(22) Anmeldetag: 28.10.1998
(51) Int. Cl.: C08G 18/10

(54) **Verfahren zur Herstellung von Polyisocyanat-Polyadditionsprodukten**
Preparation process for polyisocyanate-polyaddition products
Procédé de préparation de produits de polyaddition d'isocyanates

(30) Priorität: 10.12.1997 DE 19754601
(43) Veröffentlichungstag der Anmeldung: 16.06.1999
(73) Patentinhaber: BASF AKTIENGESELLSCHAFT, 67056 Ludwigshafen (DE)
(72) Erfinder: Leberfinger, Marcus Dr., 49448 Hüde (DE); Lange, Martin, 49377 Vechta (DE); Bittner, Gerhard Dr., 49356 Diepholz (DE); Scholz, Günter Dr., 49448 Lemförde (DE)

(56) Entgegenhaltungen:
- DE-A- 4 412 329
- GB-A- 1 412 432
- US-A- 4 413 111

## Beschreibung

Die Erfindung betrifft Verfahren zur Herstellung von Polyisocyanat-Polyadditionsprodukten. Des weiteren bezieht sich die Erfindung auf Polyisocyanat-Polyadditionsprodukte, die durch ein solches Verfahren erhältlich sind.

Die Herstellung von Polyisocyanat-Polyadditionsprodukten, beispielsweise thermoplastischen Polyurethanen, die im Folgenden auch als TPU abgekürzt werden, ist allgemein bekannt.

TPU sind teilkristalline Werkstoffe und gehören zu der Klasse der thermoplastischen Elastomere. Charakteristisch für Polyurethan-Elastomere ist der segmentierte Aufbau der Makromoleküle. Aufgrund der unterschiedlichen Kohäsionsenergiedichten dieser Segmente erfolgt im idealen Fall eine Phasentrennung in kristalline "harte" und amorphe "weiche" Bereiche. Die resultierende Zweiphasenstruktur bestimmt das Eigenschaftsprofil von Fasern, die aus diesen Polyurethansystemen hergestellt werden. Die Weichphase ist aufgrund der Entropieelastizität der langkettigen Weichsegmente für die Elastizität und die Hartphase für die Festigkeit, Formund Temperaturbeständigkeit der Polyurethanfasern verantwortlich. In der Hartphase sind die Polymerketten über intermolekulare Wechselwirkungen der Hartsegmente fixiert. Es liegt ein hauptsächlich aus Wasserstoffbrücken bestehendes physikalisches Netzwerk vor. Unter mechanischer Belastung werden diese Wechselwirkungen teilweise überwunden, so daß es innerhalb der Hartphase zu irreversiblen Umstrukturierungen der Hartsegmente kommt. Dies wirkt sich negativ auf das Hystereseverhalten aus. Besonders schmelzgesponnene Polyurethanfasern zeigen hier große Arbeitsund Kraftverluste sowie hohe Restdehnungen. Zur Verbesserung der Fasereigenschaften ist deshalb eine bessere Fixierung der Hartsegmente notwendig. Des weiteren zeigen bekannte TPU auf der Basis von aromatischen Isocyanaten bei Bestrahlung und Lagerung eine unerwünschte Tendenz zur Verfärbung.

Der vorliegenden Erfindung lag deshalb die Aufgabe zugrunde, ein Verfahren zur Herstellung von Polyisocyanat-Polyadditionsprodukten zu entwickeln, das zur Herstellung von lichtechten Polyisocyanat-Polyadditionsprodukte mit verbesserter Temperaturstabilität, meßbar anhand der heat-distortion-temperature, und einem verbesserten Hystereseverhalten nach Belastung geeignet ist. Zudem sollten die Komponenten, die in diesem Verfahren eingesetzt werden, lagerstabil sein, d.h. die in dem erfindungsgemäßen Verfahren eingesetzten thermoplastischen Polyisocyanat-Polyadditionsprodukte (i) sollten kaum freie Isocyanatgruppen aufweisen, die Vernetzungen in Form von Allophanat- und/oder Isocyanuratstrukturen bilden können.

Diese Aufgabe konnte erfindungsgemäß dadurch gelöst werden, daß man in (i) thermoplastische Polyisocyanat-Polyadditionsprodukte (ii) Isocyanatgruppen aufweisende Verbindungen einbringt und man (i) thermoplastische Polyisocyanat-Polyadditionsprodukte in erweichtem oder geschmolzenem Zustand mit (ii) Isocyanatgruppen aufweisenen Verbindungen mischt.

Erfindungsgemäß wird man somit das Einbringen der Komponente (ii) in die Komponente (i) derart durchführen, daß man (i) thermoplastische Polyisocyanat-Polyadditionsprodukte in erweichtem oder geschmolzenem Zustand mit (ii) Isocyanatgruppen aufweisenden Verbindungen mischt. Bei diesem erfindungsgemäßen Vermischen der Komponenten (i) und (ii) können die TPU (i) in erweichtem oder geschmolzenem Zustand, üblicherweise bei einer Temperatur von 150 bis 230 °C, bevorzugt in geschmolzenem Zustand bei 180 bis 220 °C, beispielsweise auf allgemein bekannten Apparaturen, bevorzugt einem Extruder oder einer Spinnanlage, die über geeignete Temperiereinrichtungen verfügen und denen gegebenenfalls übliche Mischern vorgeschaltet sind, gemischt werden. Die Vermischung der Komponenten (i) und (ii) kann durch übliche Einrichtungen wie statische und/oder dynamische Mischer erreicht werden. Bevorzugt befindet sich auch die Komponente (ii) bei der gewählten Mischtemperatur in einem erweichten oder flüssigen Zustand. Diesem Vermischen kann ein oben beschriebenes Einquellen der komponente (ii) in die komponente (i) vorgeschaltet sein.

Die Mischung enthaltend die Komponenten (i) und (ii) kann nach allgemein bekannten Verfahren, beispielsweise in einem Extruder, einer Spritzgußanlage oder einer Spinnanlage, beispielsweise durch Schmelzverspinnen, homogen vermischt und zu Formkörpern aller Art, Folien, Schläuchen, Kabelummantelungen, Spritzgußartikeln oder Fasern verarbeitet werden. Die Verarbeitungstemperatur bei der Herstellung der Folien, Formkörpern oder Fasern beträgt bevorzugt bis 150 bis 230 °C, besonders bevorzugt 180 bis 220 °C. Eine Verarbeitung der Mischung zu den gewünschten Folien, Formkörpern und/oder Fasern erfolgt bevorzugt direkt nach oder während dem Vermischen der Komponenten (i) und (ii), da eine thermoplastische Verarbeitung der Polyisocyanat-Polyadditionsprodukte zu Folien, Formkörpern oder Fasern bevorzugt vor und/oder während der Ausbildung der Vernetzungen durchgeführt wird.

Durch eine anschließende Temperung der Verfahrensprodukte aus der Extrusion, dem Spritzguß oder der Schmelzverspinnung, beispielsweise der Formkörper, Folien oder Fasern, bei einer Temperatur von beispielsweise 20 bis 80 °C für eine Dauer von üblicherweise mindestens 2 Stunden, bevorzugt 12 bis 72 Stunden, können Allophanat- und/oder Isocyanuratvernetzungen durch die im Überschuß vorhandenen Isocyanatgruppen in den Polyisocyanat-Polyadditionsprodukten ausgebildet werden. Diese Vernetzungen führen zu den sehr vorteilhaften Eigenschaften der Produkte in Bezug auf die Temperaturstabilität und das Hystereseverhalten nach Belastung.

Das Verhältnis der freien Isocyanatgruppen der Komponente (ii) plus der insgesamt zur Herstellung der Komponente (i) eingesetzten Isocyanatgruppen zu den wasserstoffaktiven Gruppen, die zur Herstellung von (i) und gegebenenfalls (ii) eingesetzt wurden, beträgt bevorzugt 1,05 : 1 bis 1,25 : 1, besonders bevorzugt 1,06 : 1 bis 1,2 : 1. Durch diesen Überschuß an Isocyanatgruppen wird erreicht, daß diese Isocyanatgruppen während und/oder nach dem Mischen der Komponenten (i) und (ii) in kaltem oder warmem Zustand der Komponenten Vernetzungen in Form von beispielsweise Allophanat- und/oder Isocyanuratstrukturen ausbilden, die zu den verbesserten Eigenschaften der Polyisocyanat-Polyadditionsprodukte führen. Die Bildung der Vernetzungen kann gegebenenfalls durch Zugabe von Katalysatoren, die zu diesem Zweck allgemein bekannt sind, beispielsweise Alkaliacetate- und/oder formiate, gefördert werden.

Die Herstellung der TPU (i) erfolgt üblicherweise derart, daß man (a) Isocyanate, (b) gegenüber Isocyanate reaktive Verbindungen mit einer mittleren Funktionalität von 1,8 bis 2,5, bevorzugt 1,9 bis 2,2, und einem Molekulargewicht von 500 bis 8000 g/mol und gegebenenfalls (c) Kettenverlängerungmittel mit einem Molekulargewicht von kleiner 500 g/mol, (d) Katalysatoren und/oder (e) übliche Hils- und/oder Zusatzstoffe nach allgemein bekannten Verfahren umsetzt. Beispielsweise kann die Umsetzung der Ausgangskomponenten in einem one-shot-Verfahren oder einem Prepolymerverfahren, beispielsweise durch Umsetzung eines Isocyanatgruppen aufweisenden Prepolymers, das aus (a) und Teilen der Komponenten (b) und gegebenenfalls (c) hergestellt werden kann, mit dem restlichen (b) und gegebenenfalls (c), auf einer üblichen Bandanlage oder mit einem bekannten Reaktionsextruder erfolgen. Die Temperatur bei dieser Umsetzung beträgt üblicherweise 60 bis 250 °C. Die TPU können in dem erfindungsgemäßen Verfahren in üblicher Form, beispielsweise als Granulat oder Pellets, eingesetzt werden.

Als Isocyanatgruppen aufweisende Verbindungen (ii) können erfindungsgemäß sowohl übliche Isocyanate (a) als auch Isocyanatgruppen aufweisende Prepolymere, die wie bereits beschrieben aus (a), (b) und gegebenenfalls (c) hergestellt werden können, eingesetzt werden. Die Prepolymere weisen bevorzugt einen Gehalt an Isocyanatgruppen (NCO-Gehalt) von 1,5 bis 20%, besonders bevorzugt 2 bis 10%, auf.

Bevorzugt basieren die Komponenten (i) und/oder (ii) auf aliphatischen und/oder cycloaliphatischen Isocyanaten, d.h. 50 bis 100%, besonders bevorzugt 75 bis 100% der Gewichtssumme der Isocyanate, die als (ii) und zur Herstellung von (i) und gegebenenfalls (ii) eingesetzt werden, basieren auf aliphatischen und/oder cycloaliphatischen Isocyanaten. Besonders bevorzugt wird als Isocyanat Hexamethylendiisocyanat eingesetzt.

Im Folgenden sollen die Komponenten (a) bis (e) beispielhaft dargestellt werden. Die im Folgenden angegebenen Molekulargewichte weisen, soweit nicht genannt, die Einheit g/mol auf.
a) Als organische Isocyanate (a) kommen erfindungsgemäß aliphatische und/oder cycloaliphatische und gegebenenfalls zusätzlich aromatische Diisocyanate in Betracht. Im einzelnen seien beispielhaft genannt: aliphatische Diisocyanate, wie Hexamethylen-diisocyanat-1,6, 2-Methyl-pentamethylen-diisocyanat-1,5, 2-Ethyl-butylen-diisocyanat-1,4 oder Mischungen aus mindestens 2 der genannten C₆-Alkylen-diisocyanate, Pentamethylen-diisocyanat-1,5 und Butylen-diisocyanat-1,4, cycloaliphatische Diisocyanate, wie 1-Isocyanato-3,3,5-trimethyl-5-isocyanatomethyl-cyclohexan (Isophoron-diisocyanat), 1,4-Cyclohexan-diisocyanat, 1-Methyl-2,4- und -2,6-cyclohexan-diisocyanat sowie die entsprechenden Isomerengemische, 4,4'-, 2,4'- und 2,2'-Dicyclohexylmethan-diisocyanat sowie die entsprechenden Isomerengemische, 1,4- und/oder 1,3-Di(isocyanatomethyl)-cyclohexan, 1,4- und/oder 1,3-Di-(isocyanatoethyl)cyclohexan, und aromatische Diisocyanate, wie 1,3- und/oder 1,4-Di(isocyanatomethyl)benzol, 2,4-Toluylen-diisocyanat, Gemische aus 2,4- und 2,6-Toluylen-diisocyanat,
   4,4'-, 2,4'- und/oder 2,2'-Diphenylmethan-diisocyanat (MDI), Gemische aus 2,4'- und 4,4'-Diphenylmethan-diisocyanat, urethanmodifizierte flüssige 4,4'- und/oder 2,4'-Diphenylmethan-diisocyanate, 4,4'-Diisocyanato-diphenylethan- (1,2) und 1,5-Naphthylen-diisocyanat. Vorzugsweise verwendet werden Hexamethylen-diisocyanat-1,6 und/oder Isophoron-diisocyanat.
b) Als gegenüber Isocyanaten reaktive Substanzen (b) mit einer mittleren Funktionalität von 1,8 bis 2,5, vorzugsweise 1,9 bis 2,2, besonders bevorzugt 1,95 bis 2,1, eignen sich beispielsweise Polyhydroxylverbindungen mit Molekulargewichten von 500 bis 8000, vorzugsweise Polyetherole und Polyesterole. In Betracht kommen jedoch auch hydroxylgruppenhaltige Polymere, beispielsweise Polyacetale, wie Polyoxymethylene und vor allem wasserunlösliche Formale, z.B. Polybutandiolformal und Polyhexandiolformal, und aliphatische Polycarbonate, insbesondere solche, aus Diphenylcarbonat und Hexandiol-1,6, hergestellt durch Umesterung, mit den oben genannten Molekulargewichten. Die genannten Polyhydroxylverbindungen können als Einzelkomponenten oder in Form von Mischungen zur Anwendung kommen.
   Die Mischungen zur Herstellung der TPU bzw. die TPU müssen zumindest überwiegend auf difunktionellen gegenüber Isocyanaten reaktiven Substanzen basieren.
   Des weiteren können als gegenüber Isocyanaten reaktive Substanzen (b) auch Polyamine, beispielsweise Amin-terminierte Polyether, z.B. die unter dem Namen Jeffamine® (Texaco Chemical Co.) bekannten Verbindungen eingesetzt werden, wobei die mittlere Funktionalität der Komponente (b) in dem erfindungsgemäßen Bereich liegen sollte.

Geeignete Polyetherole können hergestellt werden nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat als Katalysatoren oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest und gegebenenfalls einem Startermolekül, das 2 reaktive Wasserstoffatome gebunden enthält. Als Alkylenoxide seien z.B. genannt: Ethylenoxid, 1,2-Propylenoxid, Tetrahydrofuran, 1,2- und 2,3-Butylenoxid. Vorzugsweise Anwendung finden Ethylenoxid und Mischungen aus Propylenoxid-1,2 und Ethylenoxid. Die Alkylenoxide können einzeln, alternierend nacheinander oder als Mischung verwendet werden. Als Startermolekül kommen beispielsweise in Betracht: Wasser, Aminoalkohole, wie N-Alkyl-dialkanolamine, beispielsweise N-Methyl-diethanolamin und Diole, z.B. Alkandiole oder Dialkylenglykole mit 2 bis 12 C-Atomen, vorzugsweise 2 bis 6 C-Atomen, wie Ethandiol, Propandiol-1,3, Butandiol-1,4 und Hexandiol-1,6. Gegebenenfalls können auch Mischungen von Startermolekülen eingesetzt werden. Geeignete Polyetherole sind ferner die hydroxylgruppenhaltigen Polymerisationsprodukte des Tetrahydrofurans (Polyoxytetramethylen-glykole).

Vorzugsweise verwendet werden Polyetherole aus Propylenoxid-1,2 und Ethylenoxid, in denen mehr als 50 %, vorzugsweise 60 bis 80 % der OH-Gruppen primäre Hydroxylgruppen sind und bei denen zumindest ein Teil des Ethylenoxids als endständiger Block angeordnet ist, und insbesondere Polyoxytetramethylen-glykole.

Solche Polyetherole können erhalten werden, indem man z.B. an das Startermolekül zunächst das Propylenoxid-1,2 und daran anschließend das Ethylenoxid polymerisiert oder zunächst das gesamte Propylenoxid-1,2 im Gemisch mit einem Teil des Ethylenoxids copolymerisiert und den Rest des Ethylenoxids anschließend anpolymerisiert oder schrittweise zunächst einen Teil des Ethylenoxids, dann das gesamte Propylenoxid-1,2 und dann den Rest des Ethylenoxids an das Startermolekül anpolymerisiert.

Die im Falle der TPU im wesentlichen linearen Polyetherole besitzen üblicherweise Molekulargewichte von 500 bis 8000, vorzugsweise 600 bis 6000 und insbesondere 800 bis 3500. Sie können sowohl einzeln als auch in Form von Mischungen untereinander zur Anwendung kommen.

Geeignete Polyesterole können beispielsweise aus Dicarbonsäuren mit 2 bis 12 Kohlenstoffatomen, vorzugsweise 4 bis 8 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Korksäure, Azelainsäure, Sebacinsäure und vorzugsweise Adipinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Desgleichen sind Mischungen aus aromatischen und aliphatischen Dicarbonsäuren einsetzbar. Zur Herstellung der Polyesterole kann es gegebenenfalls vorteilhaft sein, anstelle der Dicarbonsäuren die entsprechenden Dicarbonsäurederivate, wie Dicarbonsäureester mit 1 bis 4 Kohlenstoffatomen im Alkoholrest, Dicarbonsäureanhydride oder Dicarbonsäurechloride zu verwenden. Beispiele für mehrwertige Alkohole sind Alkandiole mit 2 bis 10, vorzugsweise 2 bis 6 Kohlenstoffatomen, wie Ethandiol, Propandiol-1,3, Butandiol-1,4, Pentandiol-1,5, Hexandiol-1,6, Decandiol-1,10, 2,2-Dimethylpropandiol-1,3, Propandiol-1,2 und Dialkylenether-glykole wie Diethylenglykol und Dipropylenglykol. Je nach den gewünschten Eigenschaften können die mehrwertigen Alkohole allein oder gegebenenfalls in Mischungen untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen.

Als Polyesterole vorzugsweise verwendet werden Alkandiol-polyadipate mit 2 bis 6 Kohlenstoffatomen im Alkylenrest, wie z.B. Ethandiol-polyadipate, 1,4-Butandiol-polyadipate, Ethandiol-butandiol-1,4-polyadipate, 1,6-Hexandiol-neopentylglykol-polyadipate, Polycaprolactone und insbesondere 1,6-Hexandiol- 1,4-butandiol-polyadipate.

Die Polyesterole besitzen üblicherweise Molekulargewichte (Gewichtsmittel) von 500 bis 6000, vorzugsweise von 800 bis 3500.
c) Als Kettenverlängerungsmittel (c), die üblicherweise Molekulargewichte von kleiner 500 g/mol, bevorzugt 60 bis 499, besonders bevorzugt 60 bis 300 aufweisen, kommen vorzugsweise Alkandiole und/oder Alkendiole und/oder Alkindiole mit 2 bis 12 Kohlenstoffatomen, vorzugsweise mit 2, 3, 4 oder 6 Kohlenstoffatomen, wie z.B. Ethandiol, Propan-1,2- und/oder -1,3-diol, Hexandiol-1,6, und insbesondere Butandiol-1,4 und/ oder Butendiol und Dialkylenetherglykole wie z.B. Diethylenglykol und Dipropylenglykol in Betracht. Geeignet sind jedoch auch Diester der Terephthalsäure mit Alkandiolen mit 2 bis 4 Kohlenstoffatomen, wie z.B. Terephthalsäure-bis-ethandiol oder -butandiol-1,4 und Hydroxyalkylenether des Hydrochinons, wie z.B. 1,4-Di-(ß-hydroxyethyl)-hydrochinon.

Zur Einstellung von Härte und Schmelzpunkt der TPU können die Aufbaukomponenten (b) und (c) in relativ breiten molaren Verhältnissen variiert werden. Bewährt haben sich molare Verhältnisse von Polyhydroxylverbindungen (b) zu Kettenverlängerungsmitteln (c) von 1 : 1 bis 1 : 12, insbesondere von 1 : 1,8 bis 1 : 6,4, wobei die Härte und der Schmelzpunkt der TPU mit zunehmendem Gehalt an Diolen ansteigt.
d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)-acetylacetonat, Zinnverbindungen, z.B. Zinndiacetat, Zinkdioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,002 bis 0,1 Teilen pro 100 Teile Polyhydroxylverbindung (b) eingesetzt.
e) Neben Katalysatoren können den Aufbaukomponenten (a) bis (c) auch übliche Hilfsmittel und/oder Zusatzstoffe (e) hinzugefügt werden. Genannt seien beispielsweise oberflächenaktive Substanzen, Füllstoffe, Flammschutzmittel, Keimbildungsmittel, Oxidationsverzögerer, Stabilisatoren, Gleit- und Entformungshilfen, Farbstoffe und Pigmente, Inhibitoren, Stabilisatoren gegen Hydrolyse, Licht, Hitze oder Verfärbung, Farbstoffe, anorganische und/oder organische Füllstoffe, Verstärkungsmittel und Weichmacher.

Nähere Angaben über die oben genannten Hilfsmittel- und Zusatzstoffe sind der Fachliteratur zu entnehmen.

Das erfindungsgemäße Verfahren soll anhand der folgenden Beispiele näher dargestellt werden.

### Beispiele 1; HDI-TPU (NCO/OH=0,98):

2000 g (1 Mol) vorgetrocknetes PTHF 2000 wurden bei einer Temperatur von 100°C in einem Reaktionsgefäß mit Rührer vorgelegt und 180,24 g (2 Mol) Butandiol zugegeben. Nach kurzer Durchmischung wurden im Anschluß 494,5 g (2,94 Mol) HDI zugesetzt und verrührt. Die Reaktion wurde schließlich durch Zusatz von 5 - 10 ppm Dibutylzinndiacetat gestartet. Nach einer Rührzeit von ca. 5 min unter Viskositätsanstieg wurde der Ansatz in eine Schale gegossen, dort zur vollständigen Aushärtung für 10 min bei 130°C belassen und anschließend granuliert. Das Material kann auch nach mehreren Wochen zu Fasern versponnen, zu Schläuchen oder Kabelummantelungen extrudiert oder im Spritzguß verarbeitet werden.

Eine anschließende Temperung für 20 h/100°C beschleunigt das Erreichen der Endeigenschaften.

### Beispiel 2; HDI-TPU (NCO/OH=1,1):

2000 g (1 Mol) vorgetrocknetes PTHF 2000 wurden bei einer Temperatur von 100°C in einem Reaktionsgefäß mit Rührer vorgelegt und 180,24 g (2 Mol) Butandiol zugegeben. Nach kurzer Durchmischung wurden im Anschluß 555 g (3,3 Mol) HDI zugesetzt und verrührt. Die Reaktion wurde schließlich durch Zusatz von 5 - 10 ppm Dibutylzinndiacetat gestartet. Nach einer Rührzeit von ca. 5 min unter Viskositätsanstieg wurde der Ansatz in eine Schale gegossen, dort zur vollständigen Aushärtung für 10 min bei 130°C belassen, anschließend granuliert und binnen 24 h zu Fasern versponnen, zu Schläuchen oder Kabelummantelungen extrudiert oder im Spritzguß verarbeitet. Entscheidend ist hierbei, daß zur Unterdrückung stabiler Allophanat-Vernetzungen eine lange Lagerzeit vermieden wird, da sonst eine einwandfreie thermoplastische Verarbeitung nur erschwert möglich ist oder bei höheren Temperaturen durchgeführt werden muß.

Eine anschließende Temperung für 20 h/100°C beschleunigt die Ausbildung der HDI-Allophanat-Vernetzungen.

### Beispiel 3; Herstellung HDI-Prepolymers (theoret. NCO=5,21 Gew.-%):

2000 g (1 Mol) vorgetrocknetes PTHF 2000 wurden bei 70°C in einem Reaktionsgefäß vorgelegt und 420,5 g (2,5 Mol) HDI ohne Katalyse zugegeben. Die Temperatur wurde nach 15 min auf 110°C angehoben. Nach einer Rührzeit von 1,5 Stunden ist der theoretische NCO-Gehalt von 5,21 Gew.-% erreicht. Das Prepolymer ist über mehrere Wochen unter Inertgas lagerstabil. Der NCO-Verlust beträgt nach 1 Woche weniger als 0,1 Gew.-%.

Die unkatalysierte Durchführung der Prepolymer-Synthese ist von Vorteil, da hierdurch die Lagerstabilität des unkatalysierten im Vergleich zum katalysierten Prepolymers deutlich verbessert ist.

Unmittelbar vor der Verarbeitung des Prepolymeres ist es jedoch von Vorteil dem Prepolymer eine der für die PUR-Chemie üblichen Katalysatoren (0,5 - 15 ppm) zuzusetzen. Hierdurch wird der molekulare Aufbau und die Ausbildung von Allophanat-Vernetzungen bei der Durchmischung von Prepolymer mit dem TPU beschleunigt und die Klebeneigung der Endprodukte verringert.

### Beispiel 4.1. - 4.3; Zusatz HDI-Prepolymer zu HDI-TPU:

Zu einem HDI-TPU hergestellt nach Beispiel 1 wurde während einer Schlauch- oder Kabelextrusion oder während eines Spinnprozeßes das nach Beispiel 3 hergestellte Prepolymer in verschiedenen Konzentrationen in die dynamische Mischzone des Extruders zudosiert. Eine zusätzliche Durchmischung erfolgte in nachgeschalteten statischen Mischern zwischen Extruder und Düse. Die Dosierung des Prepolymeres fand bei 80°C statt.

Die Eigenschaften der hergestellten Formkörper sind in der Tabelle I dargestellt. Die Fasereigenschaften wurden nach DIN 53835 untersucht.

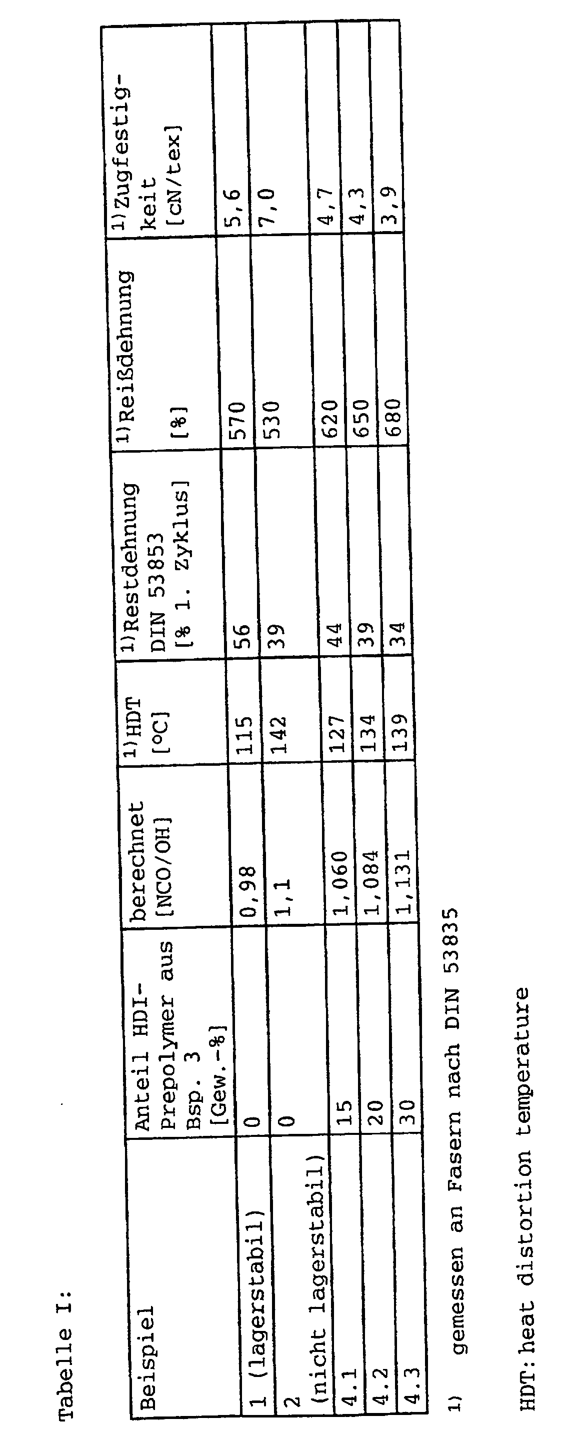

### Beispiel 5: Herstellung MDI-TPU (NCO/OH=1,04):

2000 g (1 Mol) vorgetrocknetes PTHF 2000 werden bei einer Temperatur von 100°C in einem Reaktionsgefäß mit Rührer vorgelegt und 169,7 g (1,88 Mol) Butandiol zugegeben und durchmischt. Nach dem Einstellen der Mischtemperatur auf 85°C werden im Anschluß 750,5 g (3 Mol) MDI (40°C; flüssig) zugesetzt und verrührt. Erreicht der Ansatz durch die Reaktionswärme und unter Viskositätserhöhung die Temperatur von 110°C, so wird der Ansatz in eine Schale gegossen, dort zur vollständigen Aushärtung für 10 min bei 125°C belassen und anschließend zu einem lagerstabilen TPU-Granulat granuliert.

### Beispiel 6.1. - 6.3.; Zusatz HDI-Prepolymer zu MDI-TPU:

Zu einem MDI-TPU hergestellt nach Beispiel 5 wird während einer Schlauch- oder Kabelextrusion oder während eines Spinnprozeßes das nach Beispiel 3 hergestellte HDI-Prepolymer in die dynamische Mischzone des Extruders zudosiert. Eine zusätzliche Durchmischung erfolgt in nachgeschalteten statischen Mischern zwischen Extruder und Düse. Die Dosierung des Prepolymeres findet bei 80°C statt.

Die Eigenschaften der hergestellten Formkörper sind in der Tabelle II dargestellt.

Die erfindungsgemäß hergestellten Formkörper auf der Basis von Polyisocyanat-Polyadditionsprodukten, die die gewünschten Vernetzungen aufgrund des Überschusses an Isocyanatgruppen ausgebildet haben, weisen erheblich Vorteile in den mechanischen Eigenschaften im Vergleich zu den Formkörpern der Beispiele 1 und 5 auf. Beispielsweise ist die heat-distortion-temperatur und die Reißdehnung deutlich verbessert und die Restdehnung gewünscht erniedrigt.

Das Beispiel 2 weist den wesentlichen Nachteil auf, daß das Granulat als direktes Verfahrensprodukt nicht lagerstabil ist, da im Laufe der Zeit die ursprünglich im Überschuß vorhandenen freien Isocyanatgruppen beispielsweise durch Bildung von Allophanat- und Isocyanuratstrukturen vernetzt werden. Das Granulat muß somit innerhalb kurzer Zeit zu den eigentlichen Produkten, beispielsweise Fasern, Folien oder Formkörpern weiterverarbeitet werden. Durch die vorzeitige Bildung von Vernetzungen ist eine solche Verarbeitung nur bei vergleichsweise hohen Temperaturen und nur schwierig ohne Nachteile möglich. Aufgrund der erhöhten Verarbeitungstemperaturen und den bereits gebildeten Vernetzungen treten unerwünschte Viskositäts- und Drehmomentschwankungen bei der Verarbeitung und häufig Fadenbrüche bei einem Spinnprozeß auf. Eine einwandfreie Verarbeitung dieses Material nach der Ausbildung der Vernetzungen ist nur sehr schwer möglich.

In dem erfindungsgemäßen Verfahren, siehe Beispiele 4.1. - 4.3. und 6.1 - 6.3., werden dagegen lagerstabile thermoplastische _{P}olyurethane, beispielsweise Pellets oder Granulate, erst kurz vor und/oder während der Verarbeitung beispielsweise zu Folien, Fasern oder Formkörpern mit den Isocyanatgruppen aufweisenden Verbindungen zusammengebracht. Dadurch ergeben sich die erfindungsgemäßen, verbesserten Verarbeitungsparameter, beispielsweise die niedrige Verarbeitungstemperatur, Prozeßsicherheit (keine Viskositätsschwankungen) und die verbesserten Produkteigenschaften.

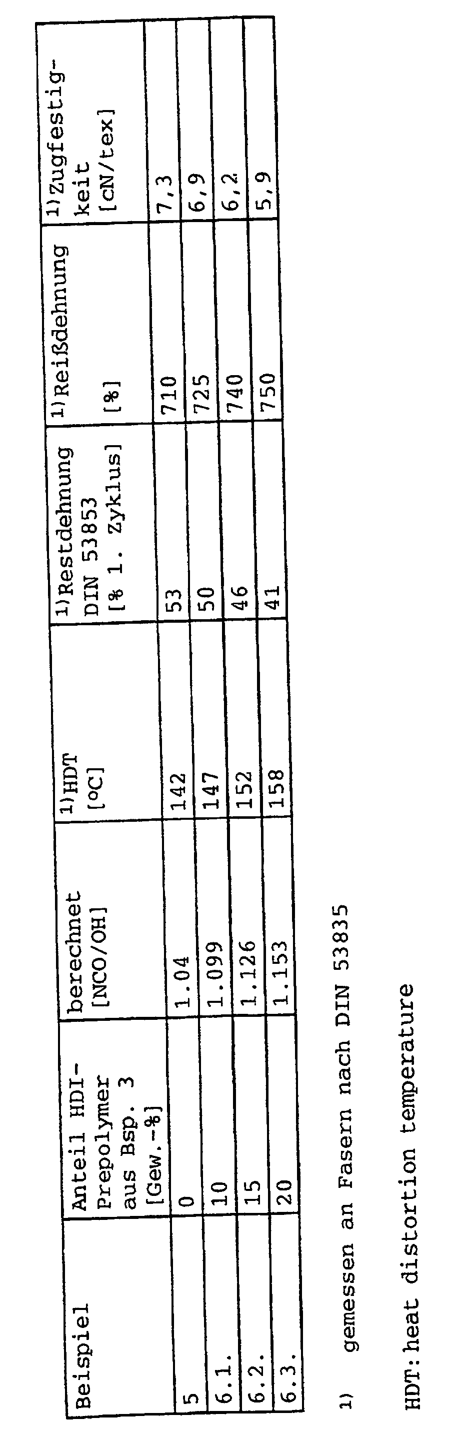

## Patentansprüche

1. Verfahren zur Herstellung von Polyisocyanat-Polyadditionsprodukten, **dadurch gekennzeichnet, daß** man in (i) thermoplastische Polyisocyanat-Polyadditionsprodukte (ii) Isocyanatgruppen aufweisenden Verbindungen einbringt und man (i) thermoplastische Polyisocyanat-Polyadditionsprodukte in erweichtem oder geschmolzenem Zustand mit (ii) Isocyanatgruppen aufweisenden Verbindungen mischt.

2. Verfahren nach Anspruch 1, **dadurch gekennzeichnet, daß** die Komponenten (i) und/oder (ii) auf aliphatischen und/oder cycloaliphatischen Isocyanaten basieren.

3. Verfahren nach einem der Ansprüche 1 bis 2, **dadurch gekennzeichnet, daß** man die Mischung enthaltend die Komponenten (i) und (ii) in einem Extruder, einer Spritzgußanlage oder einer Spinnanlage homogen vermischt und verarbeitet.

4. Verfahren zur Herstellung von Polyisocyanat-Polyadditionsprodukten, **dadurch gekennzeichnet, daß** man in (i) thermoplastische Polyisocyanat-Polyadditionsprodukte (ii) Isocyanatgruppen aufweisenden Verbindungen einbringt und man die Mischung enthaltend die Komponenten (i) und (ii) mittels Extrusion, Spritzguß oder Schmelzverspinnung zu Formkörpern, Folien, Schläuchen, Kabelummantelungen, Spritzgußartikeln oder Fasern verarbeitet und man die Verfahrensprodukte aus der Extrusion, dem Spritzguß oder der Schmelzverspinnung zur Ausbildung von Allophanat- und/oder Isocyanuratvernetzungen bei einer Temperatur von 80 bis 120 °C für eine Zeitdauer von 2 bis 48 Stunden tempert.

5. Verfahren nach einem der Ansprüche 1 bis 4, **dadurch gekennzeichnet, daß** das Verhältnis der freien Isocyanatgruppen der Komponente (ii) plus der insgesamt zur Herstellung der Komponente (i) eingesetzten Isocyanatgruppen zu den wasserstoffaktiven Gruppen, die zur Herstellung von (i) und gegebenenfalls (ii) eingesetzt wurden, 1,05 : 1 bis 1,25 : 1 beträgt.

## Claims

1. A process for the preparation of polyisocyanate polyadducts, wherein (ii) compounds having isocyanate groups are introduced into (i) thermoplastic polyisocyanate polyadducts, and (i) thermoplastic polyisocyanate polyadducts in the softened or molten state are mixed with (ii) compounds having isocyanate groups.

2. A process according to claim 1, wherein the components (i) and/or (ii) are based on aliphatic and/or cycloaliphatic isocyanates.

3. A process according to either of claims 1 and 2, wherein the mixture containing the components (i) and (ii) are homogeneously mixed and processed in an extruder, an injection molding unit or a spinning unit.

4. A process for the preparation of polyisocyanate polyadducts, wherein (ii) compounds having isocyanate groups are introduced into (i) thermoplastic polyisocyanate polyadducts, and the mixture containing the components (i) and (ii) are processed by means of extrusion, injection molding or melt spinning to give moldings, films, tubes, cable sheaths, injection molded articles or fibers, and the products of the process from the extrusion, the injection molding or the melt spinning are heated at a temperature of from 80 to 120°C for a duration of from 2 to 48 hours for the formation of allophanate and/or isocyanurate crosslinkings.

5. A process according to any of claims 1 to 4, wherein the ratio of the free isocyanate groups of the component (ii) plus the isocyanate groups used altogether for the preparation of the component (i) to the hydrogen-active groups which were used for the preparation of (i) and if appropriate (ii) is from 1.05 : 1 to 1.25 : 1.

## Revendications

1. Procédé de préparation de produits de polyaddition d'isocyanates, **caractérisé en ce que** l'on introduit des composés (ii) présentant des groupes isocyanates dans des produits (i) thermoplastiques de polyaddition d'isocyanates et on mélange les produits (i) thermoplastiques de polyaddition d'isocyanates à l'état ramolli ou fondu avec des composés (ii) présentant des groupes isocyanates.

2. Procédé selon la revendication 1, **caractérisé en ce que** les composés (i) et/ou (ii) sont à base d'isocyanates aliphatiques et/ou cycloaliphatiques.

3. Procédé selon l'une quelconque des revendications 1 à 2, **caractérisé en ce que** l'on mélange et l'on transforme de façon homogène le mélange contenant les composants (i) et (ii) dans une extrudeuse, une installation de moulage par injection ou une installation de filage.

4. Procédé de préparation de produits de polyaddition d'isocyanates, **caractérisé en ce que** l'on introduit des composés (ii) présentant des groupes isocyanates dans des produits (ii) thermoplastiques de polyaddition d'isocyanates et on transforme le mélange contenant les composants (i) et (ii) en corps moulés, en feuilles, en tuyaux, en gaines de câbles, en articles moulés par injection ou en fibres, au moyen d'une extrusion, d'un moulage par injection ou d'un filage à l'état fondu et on étuve les produits issus des procédés de l'extrusion, du moulage par injection ou du filage à l'état fondu à une température de 80 à 120°C pendant une durée de 2 à 48 heures afin de former des réticulations à groupes allophanate et/ou isocyanurate.

5. Procédé selon l'une quelconque des revendications 1 à 4, **caractérisé en ce que** le rapport des groupes isocyanates libres du composant (ii) plus les groupes isocyanates mis en oeuvre en totalité pour la préparation du composant (i), aux groupes à hydrogène actif, qui sont mis en oeuvre pour préparer (i) et éventuellement (ii), est de 1,05:1 à 1,25:1.
